# EUROPÄISCHE PATENTSCHRIFT

(11) **EP 1 362 256 B1**
(45) Veröffentlichungstag und Bekanntmachung des Hinweises auf die Patenterteilung: **28.07.2004**
(21) Anmeldenummer: 02716786.5
(22) Anmeldetag: 16.02.2002
(51) Int. Cl.: G02B 21/02, G02B 9/62, G02B 9/64

(54) **HOCHAPERTURIGES OBJEKTIV**
HIGH APERTURE OBJECTIVE
OBJECTIF GRANDE OUVERTURE

(30) Priorität: 21.02.2001 DE 10108796
(43) Veröffentlichungstag der Anmeldung: 19.11.2003
(73) Patentinhaber: Carl-Zeiss-Jena GmbH, 07745 Jena (DE)
(72) Erfinder: MATTHÄ, Manfred, 07747 Jena (DE); SCHREIBER, Lothar, 07747 Jena (DE); FAULSTICH, Andreas, 37077 Göttingen (DE); KLEINSCHMIDT, Werner, 37139 Adelebsen (DE)
(86) Internationale Anmeldenummer: PCT/EP2002/001676
(87) Internationale Veröffentlichungsnummer: WO 2002/067038

(56) Entgegenhaltungen:
- US-A- 4 537 472
- US-A- 5 502 596
- US-A- 5 659 425
- US-A- 5 805 346

## Beschreibung

Die Apertur ist ein wesentliches Kriterium zur Kennzeichnung der Leistungsfähigkeit von Mikroobjektiven. Sie ist das Produkt aus dem Sinus des halben Öffnungswinkels und der Brechzahl der Immersionsflüssigkeit bei Immersionsanwendungen.
Insbesondere bei sogenannten TIRF - Anwendungen (Total Internal Reflection Fluorescence), wo die Totalreflexion ausgenutzt wird, um Fluoreszenzen in einer Grenzschicht zu beobachten, ist der Öffnungswinkel von Bedeutung.
Bei der Fluoreszenzanregung durch Totatreflektion (TIRF) wird das Objektiv in wäßriger Probenumgebung benutzt. Es wird kollimiertes Licht an einer Stelle in der Pupille des Objektives eingekoppelt, die einer Apertur von > 1,38 entspricht. Diese Apertur liegt über dem Grenzwinkel der Totalreflektion des Deckglas-Wasser Übergangs, d.h. das eingestrahlte Licht wird durch Totalreflektion an der Grenzfläche zurückgeworfen; unmittelbar über der Grenzschicht entsteht dabei eine sog. evaneszente Lichtwelle, deren Eindringtiefe im Wasser nur in der Grössenordnung der Lichtwellenlänge liegt. Damit ist tiefenselektive Fluoreszenzanregung von Objekten in unmittelbarer Nähe der Grenzschicht möglich.

Bisherige Patentveröffentlichungen zu Mikroskopobjektiven mit Normalimmersionen überschreiten nicht wesentlich Aperturen von mehr als 1,4. Die in der Patentliteratur beschriebenen höheraperturigen Systeme (>1,4) realisieren diese über die Brechzahl der Immersionsflüssigkeit ( n ca. 1,78) (US Patent 5,659,425).
Immersionsflüssigkeiten dieser Art haben aber erhebliche Nachteile, so daß sie in der Praxis nur selten angewendet werden (giftig, inhomogen u.a.).
Zudem muss auch das Deckglasmaterial im Brechungsindex angepaßt sein, was zusätzliche Kosten verursacht.
Aufgabe der Erfindung ist es, ein Objektiv mit hoher Apertur und einfachem Aufbau zu realisieren.

Die vorliegende Erfindung realisiert einen überraschend großen Öffnungswinkel bei einfachem Aufbau, d.h. gegenüber anderen Mikroobjektiven gilt, daß der Quotient aus der numerischen Apertur und dem Brechungsindex des Immersionsöls ( normale Immersionsöle ca.1,5) nicht übertroffen wird.

Mit normalen Immersionsölen (n[546nm]=1,52) hat die Apertur in der Achse einen Wert von etwa 1,45 und am Feldrand (2y'=20mm) immer noch einen Wert von etwa 1,43. Durch die hohe Öffnung erhält man wesentliche Vorteile, wie bessere Detailauflösung und höhere Lichtstärke.

### Ausführungsbeispiel

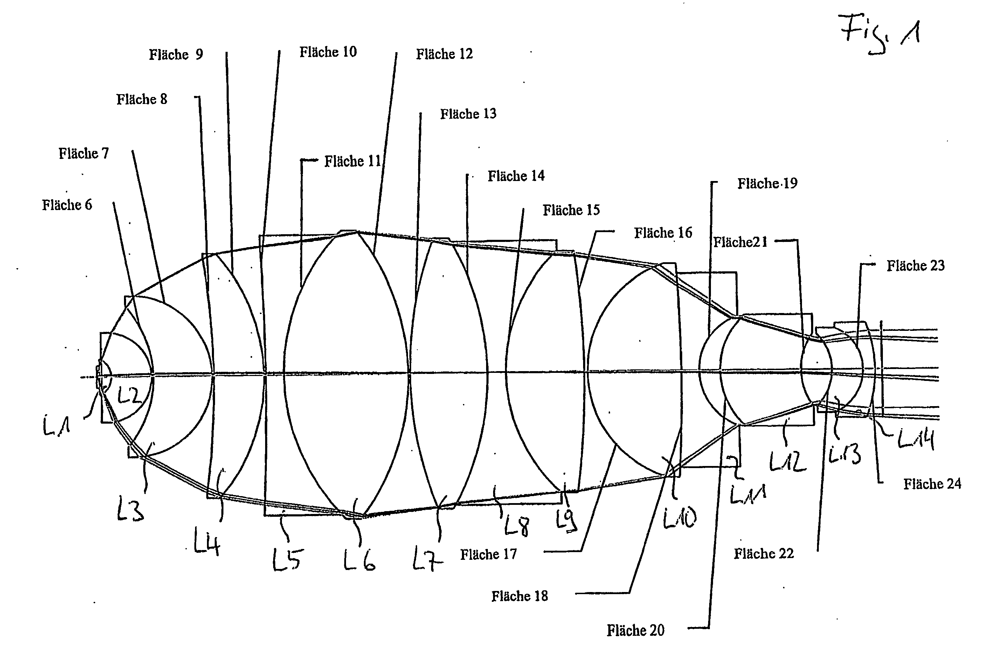

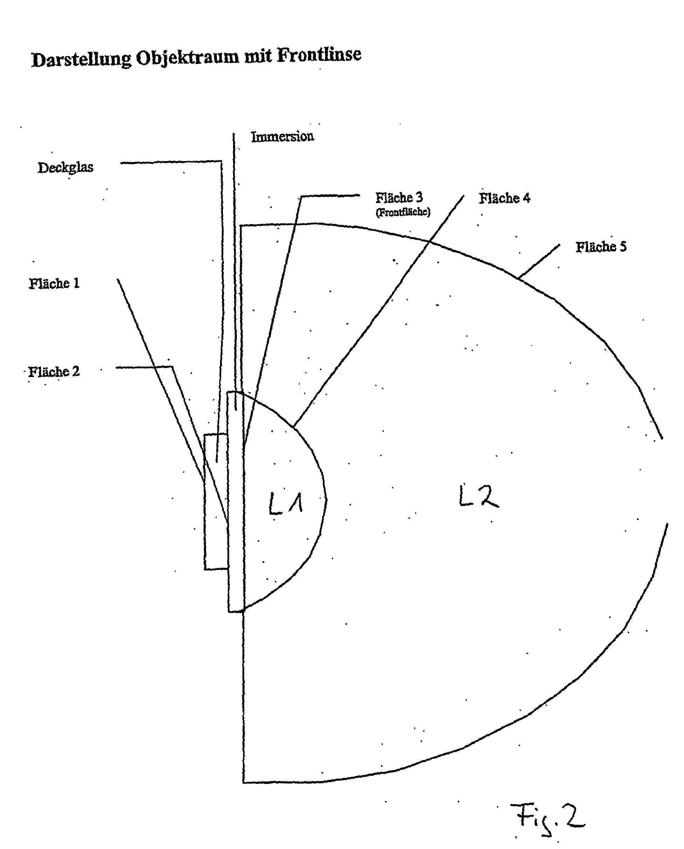

Erreicht werden die o.g. extremen Leistungsmerkmale durch einen optischen Aufbau, der wie folgt gekennzeichnet ist:
Hochaperturiges Objektiv, gekennzeichnet durch die Bedingung A/n>0,938, wobei A die Apertur und n die Brechzahl des Immersionsmittels bei 546nm ist. In Fig. 1 ist ein erfindungsgemäßes Objektiv schematisch dargestellt, in Fig.2 sind die vorderen Linsengruppen ( Frontgruppe) vergrößert dargestellt. Die Frontgruppe besteht aus einer Linse L1 mit positiver Brechkraft f1 und niedrigem Brechungsindex ( n[546nm]<1,6), welche in eine Linse mit negativer Brechkraft f2 und hohem Brechungsindex ( n[546nm]>1,7 , eingebettet verkittet ist. Das Brennweitenverhältnis zwischen beiden Linsen liegt im Bereich - 0,4<(Brennweite f1 "+" geteilt durch Brennweite f2 "-") <-0,1. Die Gesamtbrechkraft der Gruppe ist positiv.

Zur Minderung des Öffnungswinkels folgen der Frontgruppe zwei Sammellinsen L3,L4 deren Verhältnis Durchmesser d3,d4 zu Brennweite f3,f4 jeweils der Forderung genügt, größer 0,3 und kleiner 0,6 zu sein.

Die nachfolgende Gruppe besteht aus einer Negativlinse L5 und einer Sammellinse L6, wobei die Negativlinse der Frontgruppe zugewandt ist. Das Brennweitenverhältnis beider Linsen f5 :f6 liegt zwischen -0,5 und -2.. Die Gesamtbrechkraft dieser Gruppe ist positiv.

Die nächste Gruppe besteht aus 3 verkitteten Linsen L7,L8,L9 mit positiver Gesamtbrechkraft und Einzelbrennweiten f7>0, f8<0 und f9>0 denen sich 5 weitere zum Teil verkittete Linsen L10,L11, L12,L13,L14 anschließen, welche überwiegend zum Ausgleich von Feldfehlern wirken. Zwischen L11 und L12 sowie L12 uns L13 befindet sich ein Luftabstand.

Das unten beschriebene Beispiel der Daten eines Tubuslinsenbeispiels kann durch andere Beispiele ersetzt werden , es dient dem Ausgleich von Restfehlern (z.B. Farbdifferenzen) im auf unendlich korrigierten Objektiv, andere Tubuslinsen können vom Anwender mit dem beschriebenen Objektiv kombiniert werden, wenn deren Korrektion nicht konträr den Korrektionsanforderungen des beschriebenen Objektivs entgegengerichtet ist.
Das beschriebene Objektiv realisiert in der Achse und bis zum Bildfeld von 2y'=20mm eine exzellente optische Korrektur. Die Apertur beträgt 1,45 bei einer 100- fachen Vergrößerung.
Achromasie besteht zwischen den Wellenlängen C' und F', wobei das verbleibende sekundäre Spektrum innerhalb des Tiefenschärfenbereiches liegt. Die Verzeichnung ist minimal.

### Systemdaten eines Designbeispiels

Das vorgestellte Mikroobjektiv wurde mit einem Deckglas der Dicke 0,17mm korrigiert. Der Abstand Deckglas 1.Linsenfläche beträgt 0,12mm.

| Fläche | Radien | Distanzen | Medium |
|---|---|---|---|
| 1 | Unendlich | 0,17 | Deckglas |
| 2 | Unendlich | 0,12 | |
| Immersionsoel | | | |
| 3 | Unendlich | 0,6 | N-BK7 |
| 4 | -1,2579 | 2,5 | N-LASF31 |
| 5 | -2,778 | 0,1 | Luft |
| 6 | -6,5423 | 3,64 | N-FK51 |
| 7 | -4,9407 | 0,1 | Luft |
| 8 | -44,666 | 3,09 | N-PK51 |
| 9 | -11,14 | 0,103 | Luft |
| 10 | -139,25 | 1,11 | N-KzFS4 |
| 11 | 12,23 | 7,76 | N-PK51 |
| 12 | -13,925 | 0,1 | Luft |
| 13 | 21,754 | 4,87 | Flußspat |
| 14 | -15,961 | 1,16 | N-KzFS4 |
| 15 | 9,8584 | 4,87 | N-PK51 |
| 16 | -51,958 | 0,205 | Luft |
| 17 | 6,7777 | 5,83 | N-PK51 |
| 18 | -93,056 | 1,1 | N-KzFS4 |
| 19 | 3,5485 | 1,306 | Luft |
| 20 | 4,5281 | 4,85 | N-PK51 |
| 21 | 3,759 | 1,907 | Luft |
| 22 | -3,1612 | 1,92 | SF2 |
| 23 | -2,8175 | 0,73 | N-FK51 |
| 24 | -8,1748 | 96,419 | Luft |
| mit Tubuslinse | | | |
| 25 | 147,49 | 6 | BaF3 |
| 26 | -273,84 | 1,93 | Luft |
| 27 | Unendlich | 161,2 | BK7 |
| 28 | Unendlich | 54 | Luft |

### Durchmesser:

| Fläche | Freier Durchmesser |
|---|---|
| 1 | 0,2 |
| 2 | 1,35 |
| 3 | 2 |
| 4 | 2,16 |
| 5 | 5,54 |
| 6 | 8,69 |
| 7 | 9,88 |
| 8 | 14,30 |
| 9 | 14,90 |
| 10 | 15,84 |
| 11 | 17,06 |
| 12 | 17,54 |
| 13 | 16,50 |
| 14 | 16,07 |
| 15 | 14,73 |
| 16 | 14,63 |
| 17 | 13,00 |
| 18 | 11,83 |
| 19 | 6,74 |
| 20 | 6,85 |
| 21 | 4,51 |
| 22 | 4,47 |
| 23 | 5,20 |
| 24 | 5,83 |

### Toleranzen:

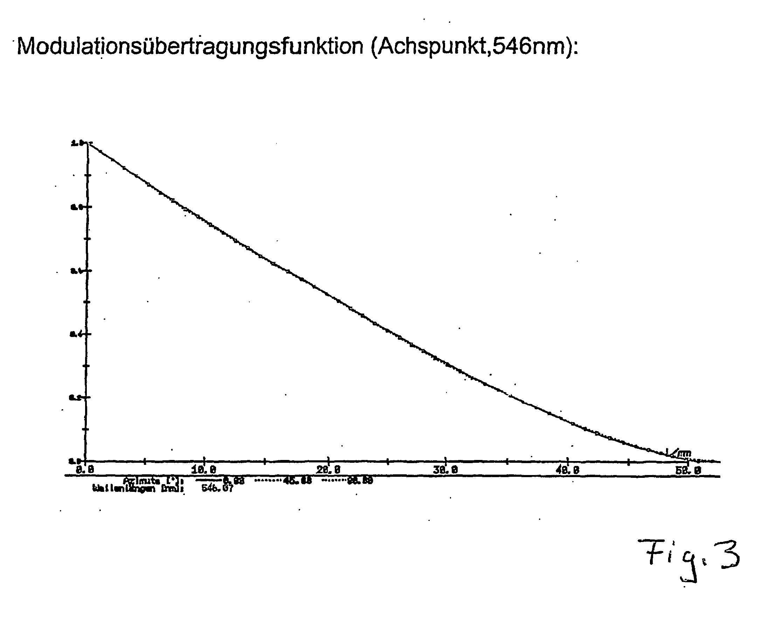

Radientoleranzen(Passe) < 4 Newtonringe
Abweichungen bei Dicken und Abständen < 0,06mm
Maximale Brechzahlabweichungen +/-0,0005
In Fig. 3 ist die Modulationsübertragungsfunktion (Achspunkt, Wellenlänge 546nm):
dargestellt.

Die Modulationsübertragungsfunktion (MÜF) ist ein international anerkanntes Kriterium zur Analyse und Darstellung der Leistungsfähigkeit von optischen Systemen. Sie beschreibt mit welchem Kontrast eine Menge von Linienpaaren noch aufgelöst wird. Die Anzahl der Linienpaare pro mm steht in der Abszissenachse, während die Ordinatenachse den Kontrast von 0(kein Kontrast) bis 1 (voller Kontrast) anzeigt. Da die Auflösung stark von der Apertur abhängt, belegt die angegebene MÜF die extrem große Öffnung des Erfindungsobjektivs. Die Angaben beziehen sich auf den Achspunkt im Zwischenbild. Im Objektraum ist die Zahl der aufgelösten Linienpaare um den Faktor 100 (Abbildungsmaßstab) größer.

## Patentansprüche

1. Hochaperturiges Objektiv, bestehend aus
einer ersten Linse L1 mit positiver Brechkraft f1 und einer zweiten Linse L2 mit negativer Brechkraft f2 wobei das Brennweitenverhältnis zwischen beiden
Linsen im Bereich -0,4<(f1/ f2) <-0,1 liegt und die Gesamtbrechkraft 1/f1+1/f2 größer Null ist ,
zwei positiven Linsen L3,L4 deren Verhältnis Durchmesser d3,d4 zu Brennweite f3,f4 jeweils der Forderung genügt, größer 0,3 und kleiner 0,6 zu sein:
0,3< d3/f3<0,6, 0,3< d4/f4<0,6,
einer Negativlinse L5 und einer Sammellinse L6, wobei die Negativlinse der Frontgruppe zugewandt ist und das Brennweitenverhältnis von L5 und L6 f5 /f6 zwischen -0,5 und -2 liegt:
-2 < f5/f6 < -0,5, wobei die Nummerierung der Linsen an der Objektivseite beginnt.

2. Objektiv nach Anspruch 1, mit einer weiteren Gruppe bestehend aus mehreren, vorzugsweise 3, verkitteten Linsen L7,L8,L9 mit positiver Gesamtbrechkraft und einer Einzelbrechkraftfolge Positiv-Negativ-Positiv denen sich vorzugsweise 5 weitere zum Teil verkittete Linsen L10,L11, L12,L13,L14 anschließen, welche überwiegend zum Ausgleich von Feldfehlem wirken.

3. Objektiv nach Anspruch 2, wobei sich zwischen L11 und L12 sowie L12 und L13 ein Luftabstand befindet.

## Claims

1. High-aperture objective, consisting of
a first lens L1 having positive power f1 and a second lens L2 having negative power f2, wherein the focal distance ratio between the two lenses is in the range of -0.4 < (f1/f2) < -0.1 and the total power 1/f1 + 1/f2 is greater than zero,
two positive lenses L3, L4, the ratio of diameter d3, d4 to focal distance f3, f4 of each of the lenses satisfying the requirement of being greater than 0.3 and smaller than 0.6: 0.3 < d3/f3 < 0.6,-0.3 < d4/f4 < 0.6
a negative lens L5 and a collective lens L6, wherein the negative lens faces the front group and the focal distance ratio ofL5 and L6 f5/f6 is between -0.5 and -2: - 2 < f5/f6 < -0.5, wherein the lenses are numbered starting from the objective-side.

2. Objective as claimed in Claim 1, having a further group consisting of several, preferably 3, cemented lenses L7, L8, L9 having positive total power and a single power succession positive-negative-positive, preferably 5 further partially cemented lenses L10, L11, L12, L13, L14 being connected thereto and acting predominantly for compensating field errors.

3. Objective as claimed in Claim 2, wherein there is a space between L11 and L12 as well as between L12 and L13.

## Revendications

1. Objectif grande ouverture, constitué
- d'une première lentille L1 d'une puissance de réfraction positive f1 et d'une deuxième lentille L2 d'une puissance de réfraction négative f2, où le rapport de la distance focale entre les deux lentilles se situe dans la plage de -0,4<(f1/f2). <-0,1 et la puissance de réfraction totale 1/f1+1/f2 est plus grande que zéro,
- de deux lentilles positives L3,L4 dont le rapport diamètre d3,d4 à la distance focale f3,f4 satisfait respectivement à l'exigence, à savoir d'être plus grand que 0,3 et plus petit que 0,6 :
- 0,3<d3/f3<0,6 0,3<d4/f4<0,6,
- d'une lentille négative L5 et d'une lentille convergente L6, où la lentille négative est orientée vers le groupe frontal, et le rapport de la distance focale de L5 et L6 f5/f6 se situe entre -0,5 et -2 :
- 2<f5/f6<-0,5, où la numérotation des lentilles commence au côté de l'objectif.

2. Objectif selon la revendication 1, avec un autre groupe constitué de plusieurs, de préférence 3 lentilles cimentées L7,L8,L9 d'une puissance de réfraction totale positive et d'une suite de puissance de réfraction individuelle positive - négative - positive auxquelles font suite de préférence 5 autres lentilles L10,L11,L12,L13,L14 en partie cimentées, qui agissent en majorité pour compenser des erreurs de champ.

3. Objectif selon la revendication 2, où se trouve entre L11 et L12 ainsi que L12 et L13 un espace d'air.
